Europäisches Patentamt

European Patent Office

Office européen des brevets

(19)

(11) Veröffentlichungsnummer: **0 146 684**

**A1**

(12) **EUROPÄISCHE PATENTANMELDUNG**

(21) Anmeldenummer: **84109271.1**

(22) Anmeldetag: **04.08.84**

(51) Int. Cl.⁴: **F 16 L 37/06**
**F 16 L 23/00**

(30) Priorität: **21.12.83 DE 3346069**

(43) Veröffentlichungstag der Anmeldung:
**03.07.85 Patentblatt 85/27**

(84) Benannte Vertragsstaaten:
**BE CH DE FR GB IT LI**

(71) Anmelder: **Uhde GmbH**
**Friedrich-Uhde-Strasse 15 Postfach 262**
**D-4600 Dortmund 1(DE)**

(72) Erfinder: **Huber, Johann**
**Rathenaustrasse 16**
**D-4600 Dortmund 1(DE)**

(72) Erfinder: **Lorenz, Lutz, Dipl.-Ing.**
**Arnold-Böcklin-Strasse 57**
**D-4600 Dortmund 1(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) **Rohrverbindung mit fernbetätigbaren Festlege- und Löse-einrichtungen.**

(57) Bei einer Rohrverbindung mit einer konusförmigen Mutterhälfte und einer entsprechend konusförmigen Vaterhälfte und mit fernbetätigbaren Einrichtungen zur Festlegung dieser beiden Hälften miteinander und Lösung derselben voneinander, soll eine Lösung geschaffen werden, welche es gestattet, die Rohrverbindung selbst konstruktiv einfach auszugestalten und zum anderen komplizierte Manipulatoren entbehrlich macht, vielmehr mit einer einfachen axialen Heranführung bzw. Entfernung der beweglichen Rohrverbindungshälfte auskommt, wobei ferner die Möglichkeit gegeben sein soll, auch den Bereich der eigentlichen Dichtflächen unter Vermeidung spezieller Dichtungselemente, wie Packungen u. dgl., weiter zu vereinfachen.

Dies wird dadurch erreicht, daß die fernbetätigbaren Einrichtungen aus einem zwischen den beiden Hälften (1,2) bildbaren Druckraum (14) bestehen, mittels dessen bei Vakuumaufbringung die beiden Hälften unter Herbeiführung einer entsprechenden Abdichtung im Bereich der gegeneinanderliegenden konischen Flächen (6, 7) fest gegeneinander pressbar und bei Druckmittelzuführung auseinanderdrückbar sind.

Fig. 1

EP 0 146 684 A1

Croydon Printing Company Ltd.

"Rohrverbindung mit fernbetätigbaren Festlege- und Löse-
einrichtungen"

Die Erfindung betrifft eine Rohrverbindung mit einer konusförmigen Mutterhälfte und einer entsprechend konusförmigen Vaterhälfte und mit fernbetätigbaren Einrichtungen zur Festlegung dieser beiden Hälften miteinander
und Lösung derselben voneinander.

Derartige Verbindungen sind in letzter Zeit auf dem Gebiet
der Kerntechnik insbesondere für Wiederaufarbeitungsanlagen von Bedeutung geworden, weil in vielen Bereichen dieser Anlagen ein umittelbarer menschlicher Zugang nicht möglich ist, vielmehr sämtliche erforderlichen Arbeiten mittels fernsteuerbarer Manipulatoren ausgeübt werden müssen,
wobei ein besonders häufig vorkommender Anwendungsfall der
ist, Rohrleitungsverbindungen schnell und zerstörungsfrei
fernbedient lösen und wieder verbinden zu können. Die bisher bekannten für derartige Zwecke verwendbaren Rohrverbindungen sind konstruktiv aufwendig und bedürfen komplizierter Manipulatoren, da zur Herstellung einer dichtenden
Verbindung Drehbewegungen ausgeführt werden müssen. So bei
einer bekannten Verbindung, bei der eine axial zu bewegende Hälfte der Rohrverbindung mit hinter Vorsprünge der
stationären anderen Hälfte greifenden Klauen versehen ist,
welche Klauen zu ihrer Betätigung und festen Anziehung des Drehens einer Spindel bedürfen, welche ein auf die Klauen wirkendes Druckstück axial hin- und herbewegt.

Aufgabe der Erfindung ist die Schaffung einer Lösung, welche es gestattet, die Rohrverbindung selbst konstruktiv einfach auszugestalten und zum anderen komplizierte Manipulatoren entbehrlich macht, vielmehr mit einer einfachen axialen Heranführung bzw. Entfernung der beweglichen Rohrverbindungshälfte auskommt, wobei ferner die Möglichkeit gegeben sein soll, auch den Bereich der eigentlichen Dichtflächen unter Vermeidung spezieller Dichtungselemente, wie Packungen u. dgl., weiter zu vereinfachen.

Bei einer Rohrverbindung der eingangs bezeichneten Art wird diese Aufgabe gemäß der Erfindung dadurch gelöst, daß die fernbetätigbaren Einrichtungen aus einem zwischen den beiden Hälften bildbaren Druckraum bestehen, mittels dessen bei Vakuumaufbringung die beiden Hälften unter Herbeiführung einer entsprechenden Abdichtung im Bereich der gegeneinanderliegenden konischen Flächen fest gegeneinander preßbar und bei Druckmittelzuführung auseinanderdrückbar sind.

Aufgrund dieser Ausgestaltung ist erkennbar, daß die Rohrverbindungshälften selbst sehr einfach aus wenigen Teilen herzustellen sind, vor allem aber, daß eine einfache axiale Trenn- bzw. Heranführungsbewegung der beweglichen Rohrverbindungshälfte ausreichend ist, um das gewünschte Trennen bzw. Wiederzusammenfügen der Rohrverbindung zu erreichen, so daß ein entsprechend einfacher Manipulator hierfür verwendet werden kann.

Vorteilhaft ist es dabei, wenn der Druckraum gegenüber der Umgebung mittels eines Dichtringes abgedichtet ist, der zwischen axial gerichteten Rändern von Flanschen der beiden Hälften angeordnet ist, weil dadurch, sobald die axial gerichteten Ränder einander gegenüberliegen, ein Unterdruck sofort wirksam werden kann und kein Gegendruck durch die Elastizität der Dichtung bei der axialen Annäherung der beiden Verbindungshälften hervorgerufen wird.

In Weiterbildung der Erfindung ist es besonders vorteilhaft, wenn man die konischen Flächen einen derart niedrigen Steigungswinkel bilden läßt, daß ohne Zwischenschaltung spezieller Dichtungsmittel ausschließlich die metallisch ausgebildeten konischen Flächen die Dichtung bewirken, und daß mindestens an einer der beiden Hälften ein einen Teil des Druckraumes bildendes Teil in axialer Richtung beweglich zwischen zwei Anschlagbunden der betreffenden Hälfte derart gelagert ist, daß bei schneller Druckmittelzufuhr zum Druckraum auf die betreffende Hälfte ein die konischen Flächen voneinander trennender schlagartiger Impuls ausübbar ist.

Eine solche Ausbildung ermöglicht nämlich eine besonders langlebige Gestaltung der Dichtflächen, so daß weitere Manipulationen, wie eine Auswechselung von Dichtpackungen o. dgl., vermeidbar sind. Die konischen Dichtflächen können nämlich einen gute Dichtung bewirkenden sehr niedrigen Steigungswinkel aufweisen, weil durch die Aufbringung schlagartiger Impulse auf das bewegliche Teil mindestens einer der beiden Hälften trotz dieses sehr niedrigen Steigungswinkels der konischen Dichtflächen ein Lösen derselben voneinander gewährleistet ist. Aufgrund dieser sicheren Lösungsmöglichkeit kann man sogar den Steigungswinkel der konischen Dichtflächen so niedrig wählen, daß bei einmal hergestellter mechanischer Haftreibungsverbindung zwischen den konischen Dichtflächen die Dichtung auch dann erhalten bleibt, wenn aufgrund einer Störung das normalerweise die beiden Dichtungshälften zusammenpressende Vakuum im Druckraum nicht aufrechterhalten bleibt, sofern der Druck innerhalb der Rohrleitungsverbindung bestimmte Werte nicht übersteigt, was bei sehr vielen Anwendungsfällen gegeben ist.

Die Erfindung ist nachstehend anhand der Zeichnung beispielsweise näher erläutert. Diese zeigt in

Fig. 1 eine Rohrverbindung nach der Erfindung in der Grundkonzeption im Schnitt und in

Fig. 2 eine weitere Ausführungsform der Erfindung mit zusätzlichen Einrichtungen zur Erleichterun des Trennens der Rohrverbindungshälften voneinander ebenfalls im Schnitt.

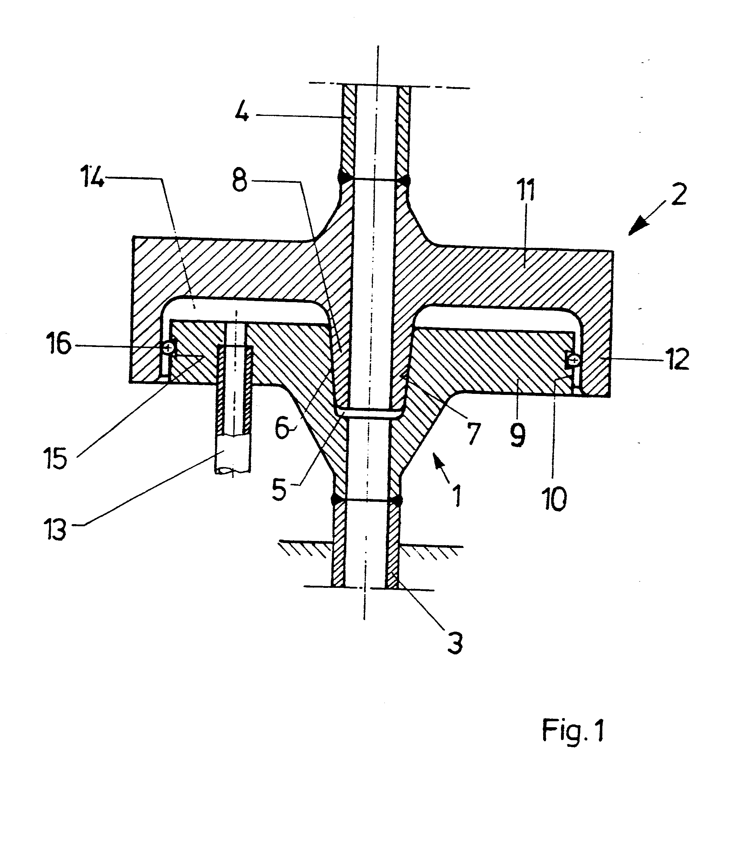

Bei dem Ausführungsbeispiel gemäß Fig. 1 besteht die Rohrverbindung im wesentlichen aus nur zwei Teilen, nämlich einer stationären Mutterhälfte 1 und einer axial beweglichen Vaterhälfte 2, die jeweils mit entsprechenden Rohrabschnitten 3 bzw. 4 verschweißt sind. Die Vaterhälfte 1 weist zentrisch eine Einmündung 5 mit konisch verlaufenden Innenflächen 6 auf und die Vaterhälfte 2 einen mit entsprechend konisch verlaufenden Außenflächen 7 versehenen Vorsprung 8.

Ferner ist die Mutterhälfte 1 mit einem radial gerichteten Flansch 9 mit einem äußeren axial gerichteten Rand 10 versehen und entsprechend ist die Vaterhälfte 2 mit einem radial gerichteten Flansch 11 und einem an diesem radial angesetzten Rand 12 ausgebildet, wobei dieser Rand 12 den Rand 10 der Mutterhälfte 1 von außen parallel umgreift.

Im Bereich des Flansches 9 der Mutterhälfte 1 mündet eine Druckmittelleitung 13 in einen Druckraum 14 ein, der zwischen den Flanschen 9 und 11 im in die Einmündung 5 eingesetzten Zustand des Vorsprungs 8 gebildet ist, wobei zur Abdichtung dieses Druckraums zwischen den axial gerichteten Rändern 10 und 12 in einer schwalbenschwanzförmigen Nut 15 ein Dichtring 16 angeordnet ist.

Die Wirkungsweise der beschriebenen Vorrichtung ist wie folgt: Das Zusammenfügen der beiden Rohrverbindungshälften 1 und 2 erfolgt in einfacher Weise derart, daß die Vaterhälfte 2 in axialer Richtung durch einen entsprechend einfach gestalteten Manipulator mit seinem konusförmigen Vorsprung 8 in die entsprechend konische Einmündung 5 der Mutterhälfte 1 eingeführt wird, worauf nach Anlage der konischen Flächen 6 und 7 Vakuum über die Druckmittelleitung 13 auf den Druckraum 14 aufgebracht wird, um die beiden Hälften 1 und 2 fest gegeneinander zu pressen unter entsprechender Abdichtung im Bereich der konischen Dichtflächen 7 und 8, wobei wegen des relativ kleinen Steigungswinkels der konischen Dichtflächen eine solch gute Abdichtung zwischen diesen bewirkt wird, daß zusätzliche Dichtmittel, wie Packungen und Dichtringe, in diesem Bereich vermeidbar sind, was deshalb von großer Bedeutung ist, weil dadurch entsprechende Ersatzwartungen entfallen können. Im Falle der Trennung der Verbindung wird anstelle des Vakuums Druckmittel dem Druckraum 14 über die Druckmittelleitung 13 zugeführt, wodurch die beiden Hälften 1 und 2 auseinandergedrückt werden, worauf dann anschließend die Vaterhälfte 2 mittels des gleichen einfachen Manipulators, der zum Zusammenfügen der beiden Hälften verwendet worden ist, wegbewegt werden kann.

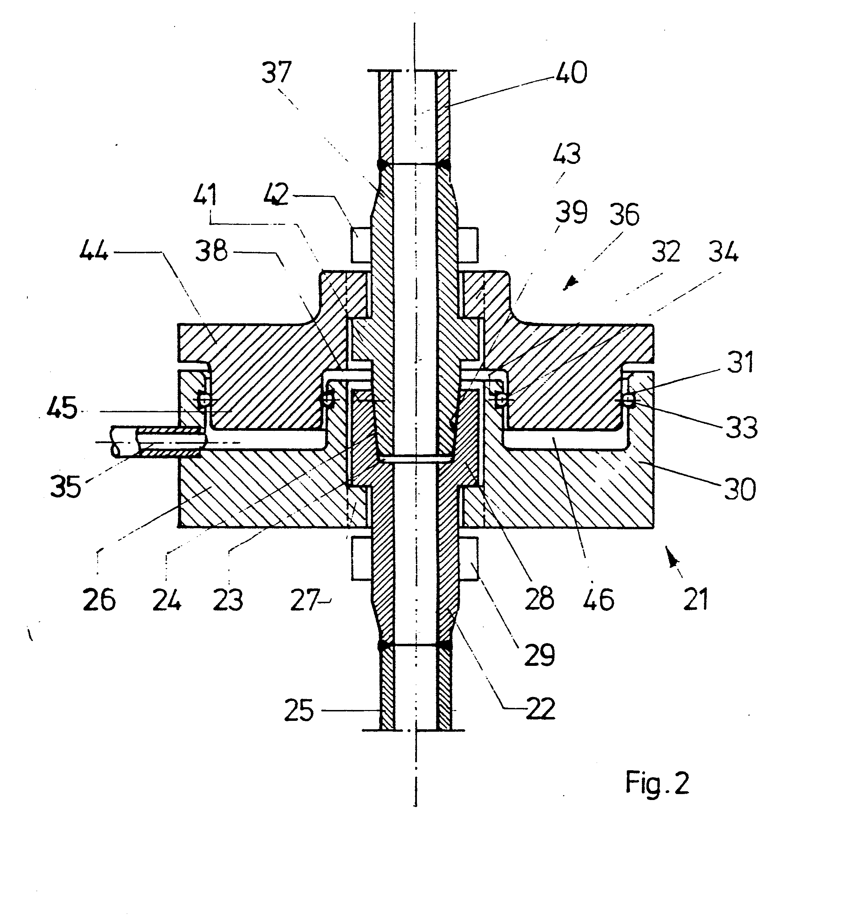

Bei dem in Fig. 2 wiedergegebenen Ausführungsbeispiel, ist eine stationäre Mutterhälfte 21 zweiteilig ausgebildet, wobei ein zentrisches Teil 22 mit einer Einmündung 23 mit konischen Innenflächen 24 mit einem Rohrabschnitt 25 fest verschweißt ist und ein äußeres Teil 26 das innere Teil 22 umgibt und dabei mit einem Anschlagring 27 zwischen zwei Anschlagbunden 28 und 29 des zentrischen Teils 22 axial beweglich gelagert ist. Das äußere Teil 26 ist ferner mit einer ringförmigen Ausnehmung 30 versehen, in deren axial gerichteten Seitenwandungen schwalbenschwanzförmige Ringnuten 31 und 32 zur Aufnahme von Dichtringen 33 und 34 ausgebildet sind. Ferner mündet in die ringförmige Ausnehmung 30 noch eine Druckmittelleitung 35 ein.

Eine Vaterhälfte 36 ist ebenfalls im wesentlichen entsprechend zweiteilig ausgebildet, wobei ein zentrisches Teil 37 mit einem Vorsprung 38 mit den konischen Innenflächen 24 entsprechenden konischen Außenflächen 39 versehen ist. Das zentrische Teil 37 ist mit einem Rohrabschnitt 40 verschweißt und ähnlich wie das zentrische Teil 22 der Mutterhälfte 21 mit zwei Anschlagbunden 41 und 42 versehen, zwischen denen ein Anschlagring 43 eines äußeren Teils 44 axial beweglich gelagert ist. Das äußere Teil 44 ist mit einem in die ringförmige Ausnehmung 30 der Mutterhälfte 21 passenden ringförmigen Ansatz 45 versehen, derart, daß beim Gegeneinanderliegen der konischen Flächen 24 und 39 ein Druckraum 46 zwischen Vaterhälfte 21 und Mutterhälfte 36 unter entsprechender Abdichtung durch die Dichtringe 33 und 34 gebildet ist.

Die Wirkungsweise dieser Ausführungsform nach Fig. 2 ist
wie folgt: Das Zusammenfügen der beiden Rohrverbindungshälften erfolgt in der gleichen Weise wie bei der vorbeschriebenen Ausführungsform nach Fig. 1, d.h. die Vaterhälfte 36 wird mittels eines einfachen Manipulators in axialer Richtung in die Mutterhälfte 21 eingeführt, worauf
beim Gegeneinanderliegen der konischen Dichtflächen 24 und
39 Vakuum auf den Druckraum 46 über die Druckmittelleitung
35 aufgebracht wird, so daß die Dichtflächen ohne zusätzliche Dichtungsmittel dichtend gegeneinander gepreßt werden. Soll nun die Verbindung wieder gelöst werden, so wird
dem Druckraum 46 über die Druckmittelleitung 35 Druckmittel mehrmals hintereinander sehr schnell zugeführt, so daß
die beweglichen äußeren Teile 26 und 44 der beiden Rohrverbindungshälften 21 und 36 mit ihren Anschlagringen 27 und
43 hammerschlagartige Impulse auf die äußeren Anschlagbunde 29 und 42 der beiden stationär nicht festgelegten
Rohrverbindungshälften ausüben, wodurch der Haftreibungsschluß zwischen den konischen Dichtflächen 24 und 39
schnell und sicher gelöst wird, so daß anschließend die
Vaterhälfte 36 in der zuvor schon beschriebenen Weise
mittels eines einfachen Manipulators entfernt werden kann.
Die Ausführungsform gemäß Fig. 2 ermöglicht es demnach, die konischen Dichtflächen zwischen den beiden Rohrverbindungshälften mit besonders niedriegem Steigungswinkel auszugestalten, wodurch die Qualität der Verbindung entsprechend erhöhbar ist, so daß nach dem anfänglichen Zusammenfügen der beiden Verbindungshälften und dem dabei erfolgenden erstmaligen Inkontaktkommen der konischen Dichtflächen diese einen so festen Reibungsschluß miteinander eingehen können, daß die Verbindung selbst dann dichtend erhalten bleibt, wenn das auf den Druckraum 46 ausgeübte Vakuum durch einen Störfall unterbrochen werden sollte, sofern im Inneren der Rohrverbindung bestimmte Drücke nicht überschritten werden.

Natürlich sind die beschriebenen Ausführungsbeispiele in vielfacher Weise abzuändern, ohne den Grundgedanken der Erfindung zu verlassen. Beispielsweise genügt es, bei einer stationär festgelegten Rohrverbindungshälfte lediglich die bewegliche Rohrverbindungshälfte mit einem axial beweglichen, die hammerschlagähnlichen Impulse auf das zugeordnete zentrische Teil ausübenden Teil zu versehen. Auch sind weitere Vereinfachungen möglich, beispielsweise in dem bei der Ausführungsform nach Fig. 1 auf die äußeren Ränder der Flansche verzichtet und der Dichtring in einer Nut in der Nähe des äußeren Randes des radial gericheten Flansches 9 der Mutterhälfte 1 angeordnet wird. Bei der Ausführungsform nach Fig. 1 kann man den Rand 12 der Vaterhälfte 2 auch noch dazu benutzen, auf diesen hammerschlagartige Impulse mittels anderer geeigneter Einrichtungen
zur Erleichterung des Trennvorganges auszuüben.

Die Mutter- und Vaterhälften bzw. deren Flansche können
auch Teil einer Armatur, eines Apparates oder eines Maschinenkörpers, z.B. einer Pumpe sein u. dgl. mehr.

Patentansprüche:

1. Rohrverbindung mit einer konusförmigen Mutterhälfte und einer entsprechend konusförmigen Vaterhälfte und mit fernbetätigbaren Einrichtungen zur Festlegung dieser beiden Hälften miteinander und Lösung derselben voneinander, dadurch gekennzeichnet, daß die fernbetätigbaren Einrichtungen aus einem zwischen den beiden Hälften (1,2) bildbaren Druckraum (14) bestehen, mittels dessen bei Vakuumaufbringung die beiden Hälften unter Herbeiführung einer entsprechenden Abdichtung im Bereich der gegeneinanderliegenden konischen Flächen (6,7) fest gegeneinanderpressbar und bei Druckmittelzuführung auseinanderdrückbar sind.

2. Rohrverbindung nach Anspruch 1, dadurch gekennzeichnet, daß der Druckraum (14) gegenüber der Umgebung mittels eines Dichtringes (16) abgedichtet ist, der zwischen axial gerichteten Rändern (10,12) von Flanschen (9,11) der beiden Hälften (1,2) angeordnet ist.

3. Rohrverbindungen nach Anspruch 1 oder 2, dadurch gekennzeichnet, daß die konischen Flächen (24,39) einen derart niedrigen Steigungswinkel bilden, daß ohne Zwischenschaltung spezieller Dichtungsmittel ausschließlich die metallisch ausgebildeten konischen Flächen die Dichtung bewirken und daß mindestens an einer der beiden Hälften (21,36) ein einen Teil des Druckraums (46) bildendes Teil (44) mit einem Anschlagring (43) in axialer Richtung beweglich zwischen zwei Anschlagbunden (41,42) der betreffenden Hälfte (36) derart gelagert ist, daß bei schneller Druckmittelzufuhr zum Druckraum (46) auf die betreffende Hälfte (36) ein die konischen Flächen (24,39) voneinander trennender schlagartiger Impuls von dem Anschlagring (43) auf den äußeren Anschlagbund (42) ausübbar ist.

Fig. 1

0146684

0146684

Fig.2

## EINSCHLÄGIGE DOKUMENTE

EP 84109271.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB - A - 1 375 942 (REVERTEX LTD.)<br>* Gesamt * | 1,2 | F 16 L 37/06<br>F 16 L 23/00 |
| A | FR - A - 1 363 411 (SOREMAT)<br>* Gesamt * | 1 | |
| A | US - A - 2 816 780 (N.R. ROSS)<br>* Gesamt * | 1 | |
| A | AT - B - 208 160 (BROWN BOVERI & CIE AG) | | |
| A | DE - C - 882 022 (GLANZSTOFF-COURTAULDS GMBH) | | |

RECHERCHIERTE SACHGEBIETE (Int. Cl.4)

F 16 L 19/00
F 16 L 23/00
F 16 L 25/00
F 16 L 27/00
F 16 L 37/00

Der vorliegende Recherchenbericht wurde für alle Patentansprüche erstellt.

| Recherchenort | Abschlußdatum der Recherche | Prüfer |
|---|---|---|
| WIEN | 25-02-1985 | SCHUGANICH |